# EUROPEAN PATENT SPECIFICATION

(11) **EP 1 348 848 B1**
(45) Date of publication and mention of the grant of the patent: **05.09.2007**
(21) Application number: 03006640.1
(22) Date of filing: 25.03.2003
(51) Int. Cl.: F02B 37/00, F02B 39/00, F02B 39/10

(54) **Turbocharger**
Abgasturbolader
Turbocompresseur

(30) Priority: 26.03.2002 JP 2002086334; 06.11.2002 JP 2002322764
(43) Date of publication of application: 01.10.2003
(73) Proprietor: Toyota Jidosha Kabushiki Kaisha, Toyota-shi, Aichi-ken, 471-8571 (JP)
(72) Inventor: Sasaki, Shoji, c/o Toyota Jidosha K. K., Toyota-shi, Aichi-ken, 471-8571 (JP); Igarashi, Osamu, c/o Toyota Jidosha K. K., Toyota-shi, Aichi-ken, 471-8571 (JP); Akita, Koichi, c/o Toyota Jidosha K. K., Toyota-shi, Aichi-ken, 471-8571 (JP); Hashimoto, Hiromasa, c/o Toyota Jidosha K. K., Toyota-shi, Aichi-ken, 471-8571 (JP); Masuda, Kei, c/o Toyota Jidosha K. K., Toyota-shi, Aichi-ken, 471-8571 (JP); Kanba, Chika, c/o Toyota Jidosha K. K., Toyota-shi, Aichi-ken, 471-8571 (JP)
(74) Representative: TBK-Patent

(56) References cited:
- WO-A-03/025364
- DE-A1- 10 040 508
- DE-A1- 10 156 704
- PATENT ABSTRACTS OF JAPAN vol. 018, no. 016 (M-1540), 12 January 1994 (1994-01-12) & JP 05 256155 A (ISUZU CERAMICS KENKYUSHO:KK), 5 October 1993 (1993-10-05)
- PATENT ABSTRACTS OF JAPAN vol. 014, no. 307 (M-0993), 3 July 1990 (1990-07-03) & JP 02 099722 A (ISUZU CERAMICS KENKYUSHO:KK), 11 April 1990 (1990-04-11)

## Description

### BACKGROUND OF THE INVENTION

### 1. Field of the Invention

The invention relates to a turbocharger with a motor in which a compressor and/or a turbine of the turbocharger can be driven by the motor.

### 2. Description of Related Art

An attempt has been conventionally made in which intake air of an engine (an internal combustion engine) is supercharged using a turbocharger so as to obtain high output (or low fuel consumption). One of the points to be improved in the turbocharger is that a supercharged pressure cannot be obtained quickly while an engine is in a low revolution region, and engine output characteristics in the low revolution region are not good. This is a phenomenon which occurs in the low revolution region where exhaust energy is low, due to the principle of the turbocharger that the exhaust energy is used to supercharge intake air. In order to improve this point, a twin turbo system and the like are generally employed. Also, an attempt has been made in which a motor is mounted in a turbine and/or compressor so as to forcibly drive the turbine, thereby obtaining a desired supercharged pressure.

One example of such a turbocharger with a motor is disclosed in Japanese Patent Laid-Open Publication No. 2-99722. However, in such a turbocharger with a motor, the motor is exposed to high temperatures, which causes problems, such as degauss (or demagnetization) of a permanent magnet inside the motor, or a reduction in the efficiency of the motor due to a rise in temperature, depending on the types of the motor. Also, in a case where an induction motor is employed as the motor, there may be a problem that a laminate material with low heat resistance for solidifying a laminated steel plate used as a rotor melts. Therefore, in the turbocharger with a motor disclosed in the aforementioned patent document and the like, a vane for introducing outside air into the inside of the motor is provided, thereby performing air cooling. However, according to this method, the vane is incorporated in the motor, which causes a problem that the internal structure of the motor becomes complicated.

Patent application JP 05 256155 discloses a turbocharger, the electric motor of which is cooled by supercharged air so to prevent from lowering efficiency and reliability thereof. In case of exceeding a specified temperature, oil is mixed into the air and this mixed air is sprayed to a rotor and the like of the turbocharger to prevent temperature rise.

Patent application DE 100 40 508 discloses a turbocharger having no additional motor, the bearing of which is cooled by supercharged air and by switching of an electrically driven secondary air pump.

Patent application WO 03/025364 discloses a system for controlling the temperature of an electric motor in a turbocharger, in which a pressure gradient of cooling air supplied to such motor is manipulated by airflow control means.

### SUMMARY OF THE INVENTION

Accordingly, it is an object of the invention to provide a turbocharger which can cool a motor in a simple and efficient manner, and which can prevent a reduction in the efficiency of the motor when actually needed.

According to an exemplary embodiment of the invention, a turbocharger which performs supercharging for an internal combustion engine includes a compressor, a turbine, a motor which can rotationally drive the compressor and/or the turbine, and a turbocharger housing in which the motor is mounted. The turbocharger which performs supercharging for the internal combustion engine further includes a lead-in passage whose one end is connected to the housing, and air flow generation means, which is a compressor for generating, in the lead-in passage, an air flow directed toward the inside of the housing. Such turbocharger further includes cooling control means for controlling the air flow generation means when the motor is cooled by the air flow generated by the air flow generation means, and the cooling control means limits generation of the air flow by the air flow generation means when a required output of the internal combustion engine is equal to or higher than a predetermined value.

According to the turbocharger as mentioned above, the lead-in passage is provided, and the air flow generation means generates the air flow directed toward the turbocharger housing in which the motor is mounted. As a result, the motor is cooled by the generated air flow, and a reduction in efficiency due to a rise in temperature is prevented. Also, cooling of the motor can be realized using the simple structure, that is, the lead-in passage and the air flow generation means.

Also, according to a further aspect of the invention, in the turbocharger, it is preferable that the other end of the lead-in passage should be connected to a portion on a downstream side of an intercooler in an intake passage.

According to the turbocharger as mentioned above, the intake air on the downstream side of the intercooler is led into the housing, whereby the motor can be cooled with good cooling efficiency, using the intake air whose temperature has been lowered.

Also, according to a further aspect of the invention, in the turbocharger, it is preferable that a lead-out passage should be connected to the housing in order to discharge the air flow from the inside of the housing.

According to the turbocharger as mentioned above, the air in the housing which has cooled the motor can be led into the lead-out passage quickly, and the motor can be cooled with good efficiency.

By utilizing the compressor of the turbocharger as the air flow generation means in this manner, an actuator for generating an air flow or the like does not need to be newly added, and the motor can be cooled with good energy efficiency using the simple structure.

Also, according to a further aspect of the invention, it is preferable that the turbocharger should further include output control means for controlling an output of the internal combustion engine, and the output control means should compensate for an output fluctuation of the internal combustion engine, which is caused by leading the air flow to the motor when the air flow is generated by the air flow generation means.

Also, according to a further aspect of the invention, in the turbocharger, the output control means should perform increase correction so that an amount of fuel injection increases with an increase in an amount of the air flow led to the motor when the air flow is generated by the air flow generation means.

### BRIEF DESCRIPTION OF THE DRAWINGS

The above and other objects, features, advantages, technical and industrial significances of this invention will be better understood by reading the following detailed description of preferred embodiments of the invention, when considered in connection with the accompanying drawings, in which:
FIG. 1 is a view showing a configuration of an engine having a turbocharger according to a first embodiment of the invention;
FIG. 2 is a flowchart of a control which limits cooling by an air flow when a required output of an engine is high, and
FIG. 3 is a map showing a relation between a coefficient alpha in the flowchart in FIG. 2 and the required output.

### DESCRIPTION OF THE EXEMPLARY EMBODIMENTS

In the following description and the accompanying drawings, the present invention will be described in more detail in terms of exemplary embodiments.

### [First Embodiment]

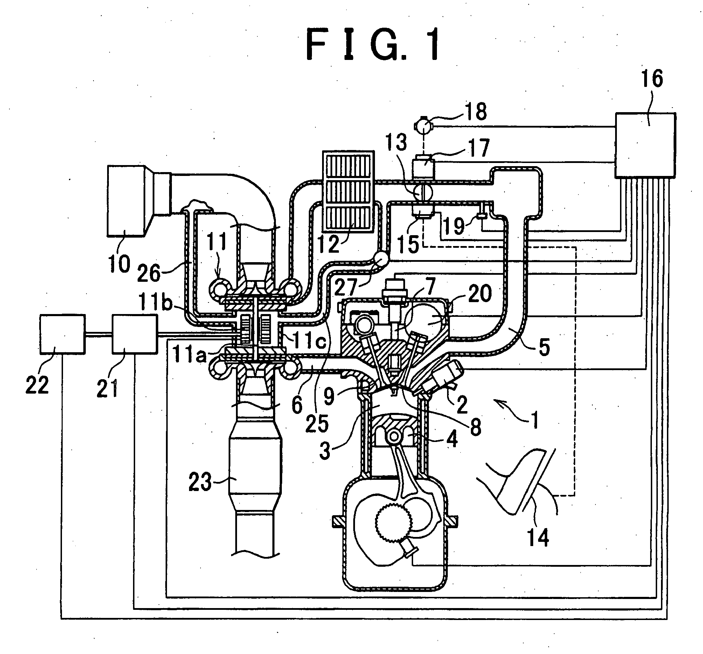

First, a turbocharger according to a first embodiment among turbochargers according to exemplary embodiments will be described. An engine 1 having this turbocharger according to the first embodiment is shown in FIG. 1. Although the engine 1 which will be described in the embodiment is an in-cylinder injection type gasoline engine, the invention can be applied to a type of gasoline engine in which fuel is injected to an intake passage, or a diesel engine.

The engine 1 which will be described in the embodiment is a multi-cylinder engine. However, only one cylinder among the multiple cylinders is shown in FIG. 1 as a cross sectional view. The engine 1 is a type of engine in which an injector 2 injects fuel to an upper surface of a piston 4 in a cylinder 3. In this engine 1, stratified charge combustion can be performed. Thus, it is a so called lean burn engine. By supercharging more intake air using a turbocharger described later so as to perform lean burn, it is possible to realize low fuel consumption as well as high output in the engine 1.

In the engine 1, air inhaled into the cylinder 3 through an intake passage 5 is compressed by the piston 4, fuel is injected to a concavity formed in the upper surface of the piston 4 so that a dense air-fuel mixture is concentrated in the vicinity of a plug 7, and this air-fuel mixture is ignited by the plug 7 so as to be burnt. An intake valve 8 opens and closes a portion between the inner portion of the cylinder 3 and the intake passage 5. Exhaust gas is discharged to an exhaust passage 6. A discharge valve 9 opens and closes a portion between the inner portion of the cylinder 3 and the exhaust passage 6. In the intake passage 5, an air cleaner 10, a turbocharger unit 11, an intercooler 12, a throttle valve 13 and the like are disposed in this order from the upstream side to the downstream side.

The air cleaner 10 is a filter which removes dirt, dust, and the like. The turbocharger unit 11 is disposed between the intake passage 5 and the exhaust passage 6 so as to perform supercharging. In the turbocharger unit 11 according to the embodiment, an impeller on the turbine side and an impeller on the compressor side are connected by a rotating shaft (hereinafter, this portion is simply referred to as a turbine/compressor 11a). In addition, the turbocharger according to the embodiment is a turbocharger with a motor in which a motor 11b is incorporated so that the rotating shaft of the turbine/compressor 11a becomes an output shaft. The motor 11b is an alternate current motor, and functions as an electric generator as well as a motor. The turbocharger unit 11 can function as an ordinary supercharger which performs supercharging using only exhaust energy. In addition, the turbocharger unit 11 can perform further supercharging by forcibly driving the turbine/compressor 11a using the motor 11b.

Also, the turbocharger unit 11 can perform regenerative electric power generation by rotating the motor 11b via the turbine/compressor 11a using the exhaust energy, and recover the generated electric power. The motor 11b includes a rotor (a permanent magnet) fixed to the rotating shaft of the turbine/compressor 11a, and a stator disposed around the rotor (i.e., a coil wound around an iron core), as main component portions. The turbine/compressor 11a and the motor 11b are housed inside a housing 11c. The air-cooling type intercooler 12 is disposed on the downstream side of the turbocharger unit 11 in the intake passage 5 so as to lower the temperature of the intake air whose temperature has risen with an increase in the pressure due to the supercharging by the turbocharger unit 11. The intercooler 12 lowers the temperature of the intake air, thereby improving the efficiency in filling the intake passage 5 with air.

The throttle valve 13 which adjusts the amount of intake air is disposed on the downstream side of the intercooler 12. The throttle valve 13 according to the embodiment is a so called electronically controlled throttle valve. An accelerator positioning sensor 15 detects the operation amount of an accelerator pedal 14. Based on the result of the detection and other information, an electronic control unit (hereinafter it is referred to as ECU) 16 determines the opening of the throttle valve 13. The throttle valve 13 is opened and closed by a throttle motor 17 which is provided in association with the throttle valve 13. Also, a throttle positioning sensor 18 which detects the opening of the throttle valve 13 is provided in association with the throttle valve 13.

Also, a lead-in passage 25 and a lead-out passage 26 are provided in association with the turbocharger unit 11. One end of the lead-in passage 25 is connected to the housing 11c of the turbocharger unit 11, and the other end thereof is connected to a portion between the intercooler 12 and the throttle valve 13. Additional intake air is supplied into the intake passage 5 past the turbocharger unit 11 by the compressor of the turbocharger unit 11. Therefore, a portion of the intake air is led into the inside of the housing 11c via the lead-in passage 25. In other words, an air flow that leads air outside the housing 11c (intake air) into the inside of the housing 11c is generated inside the lead-in passage 25. In the embodiment, the compressor of the turbocharger unit 11 functions as the air flow generation means.

The air is led into the inside of the housing 11c from the outside in this manner, whereby the motor 11b can be cooled, and a reduction in the efficiency due to reasons such as the degauss of the permanent magnet inside the motor 11b can be prevented. Particularly in the embodiment, the intake air is led into the inside of the housing 11c from the intake passage 5 using the lead-in passage 25. Thus, the basic structure is a structure in which the lead-in passage 25 is simply added to the engine having an ordinary turbocharger. Therefore, the turbocharger according to the embodiment can be realized using the extremely simple structure. In addition, since the intake air which has been cooled by the intercooler 12 is led into the inside of the housing 11c, the cooling efficiency is good.

It is preferable, in terms of the cooling efficiency, that the intake air for cooling which has been led into the inside of the housing 11c should be discharged to the outside of the housing 11c quickly after cooling. In this case, the lead-out passage 26 which connects the housing 11c and a portion of the intake passage 5 on the upstream side of the turbocharger unit 11 is provided. By providing this lead-out passage 26, it is possible to quickly discharge the air which has been used for cooling from the inside of the housing 11c, to easily lead fresh air for cooling into the inside of the housing 11c, and to further improve the cooling efficiency.

Particularly, the pressure inside the portion of the intake passage 5 on the upstream side of the turbocharger unit 11 frequently becomes vacuum (the frequency with which the pressure becomes vacuum becomes high due to the supercharging by the turbocharger unit 11). Therefore, connecting one end of the lead-out passage 26 to this portion is preferable, because it allows the air to be discharged from the inside of the housing 11c more efficiently. For this reason, it can be considered that the lead-out passage 26 according to the embodiment which connects the housing 11c and the portion of the intake passage 5 on the upstream side of the turbocharger unit 11 functions also as the air flow generation means.

Further, according to the embodiment, an adjusting amount valve 27 which adjusts the amount of air led into the housing 11c is provided in the lead-in passage 25. The adjusting amount valve 27 is connected to the ECU 16, and the amount of air led into the housing 11c can be controlled by the ECU 16. For example, it is possible to detect the temperature inside the turbocharger unit 11 using a sensor or the like, to determine whether or not the air for cooling needs to be supplied to the inside of the housing 11c, and to control the amount of the air led into the inside of the housing 11c when the air needs to be supplied thereto. Thus, it is possible to efficiently prevent a decrease in the amount of the intake air supplied to the cylinder 3 due to leading the intake air into the housing 11c.

Further, when supercharging is performed by driving the motor 11b while the engine 1 is in the low revolution region, in a case where the engine 1 reaches a region in which a surge of the compressor occurs, or other cases, the adjusting amount valve 27 is used to increase the amount of the air led into the inside of the housing 11c. As a result, the relation between the pressure ratio of the compressor and the flow amount becomes appropriate, and the surge can be avoided. Whether or not the engine 1 is in the surge region can be determined based on a pressure in an intake pipe detected by a pressure sensor 19, an atmospheric pressure detected by an atmospheric pressure sensor, the amount of intake air detected by an air flow meter, and the like.

Also, according to the first embodiment, since air is led into the inside of the housing 11c from the outside without using the vane or the like, the cooling can be performed efficiently. When the vane is used, the output of the motor is used to rotate the vane, which is not preferable in terms of efficiency. In addition, when the vane is used, the inertial weight of the rotating portion increases due to the vane, which deteriorates the response of the turbocharger. According to the embodiment, however, such a phenomenon does not occur. Further, since the component portion of the vane or the like in the aforementioned [Patent Publication 1] is exposed to high temperatures, a material with excellent heat resistance or the like needs to be used. According to the embodiment, however, such a material does not need to be used.

In the first embodiment, a portion of intake air is led into the turbocharger unit 11 from the downstream side of the intercooler 12 in order to perform cooling. Therefore, there is a possibility that the amount of intake air decreases and accordingly the output of the engine 1 decreases when cooling the turbocharger unit 11. Cases where this phenomenon is avoided will be described below.

First, a case where the cooling of the turbocharger unit 11 is restricted according to the required output of the engine 1 will be described. In this case, when the required output of the engine 1 is equal to or higher than a predetermined value, the cooling of the turbocharger unit 11 is restricted (that is, the cooling is made difficult, the cooling is inhibited, or the effect of the cooling is reduced). When the required output of the engine 1 is equal to or higher than the predetermined value, that is, when higher output is required, there is a possibility that the required output cannot be obtained if the amount of intake air decreases due to the cooling of the turbocharger unit 11. Therefore, by restricting the cooling, priority is given to realizing the required output.

In this case, the aforementioned accelerator positioning sensor 15 detects the depression amount of the accelerator pedal 14, and this depression amount is regarded as the required output of the engine 1. The output of the engine 1 depends mainly on the amount of intake air, the amount of fuel injection, ignition timing, and the like. Therefore, the value of the required output which is calculated in the ECU 16 based on these parameters may be used. The amount of intake air can be detected using the opening of the throttle valve 13 and the pressure sensor, and the amount of fuel injection can be determined using the opening time of the injector 2. In other words, the required output is determined by the ECU 16.

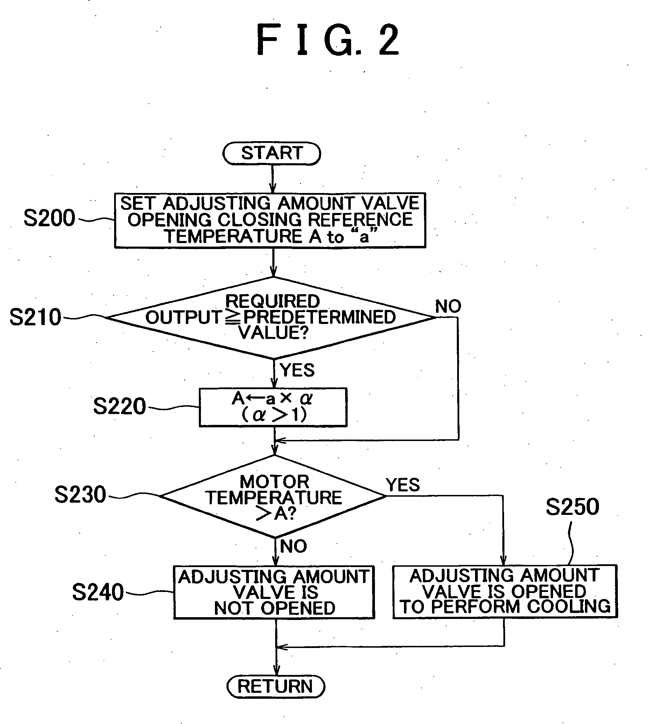

When the required output thus detected is equal to or higher than the predetermined value, a decrease in the output due to the cooling using the air flow can be avoided by closing the adjusting amount valve 27 so that the cooling of the turbocharger unit 11 using the lead-in passage 25 is not performed. Alternatively, the opening of the adjusting amount valve 27 may be controlled to be variable so that the amount of the air flow led into the turbocharger unit 11 from the downstream side of the intercooler 12 decreases. Further, the aforementioned predetermined output may be a fixed value independently of the required output (the depression amount of the accelerator pedal 14), or may be controlled to be variable depending on the required output. In the embodiment, the control of the flowchart shown in FIG. 2 is performed.

First, an adjusting amount valve opening and closing reference temperature A is set to a value "a" (step S200). The adjusting amount valve opening and closing reference temperature A is a reference for determining whether or not the cooling is to be performed by opening the adjusting amount valve 27 and leading the air flow into the inside of the turbocharger unit 11 via the lead-in passage 25. If the temperature of the turbocharger unit 11 is equal to or lower than a practical durable temperature, the cooling does not need to be performed. Therefore, the reference temperature A is set so that the cooling is performed only when the temperature of the motor 11b exceeds the reference temperature A. Thus, the energy consumption can be reduced by preventing the compressor 11c that generates the air flow from being driven, and a decrease in the output due to the cooling can be prevented by reducing the frequency with which the cooling is performed. Following step S200, it is determined whether the required output of the engine 1 is equal to or higher than the predetermined value (step S210).

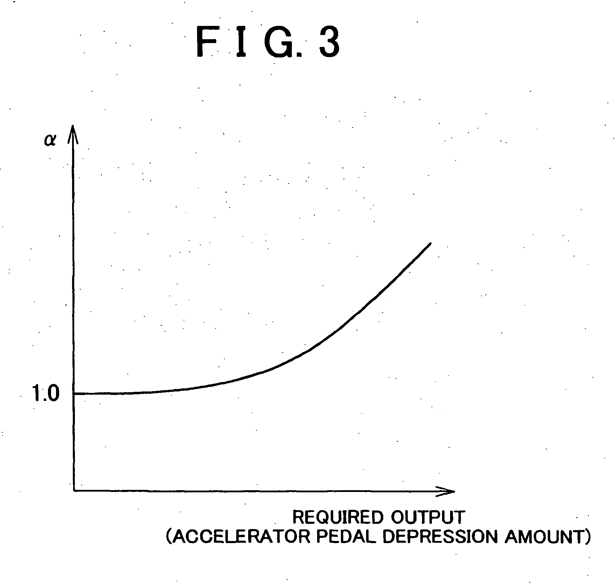

When the required output of the engine 1 is equal to or higher than the predetermined value, the reference temperature A is increased so that the cooling is restricted as mentioned above. In fact, the reference temperature A is newly set to the product of the aforementioned value "a" and a coefficient α (>1) (step S220). When the required output of the engine 1 is less than the predetermined value, this step S220 is not performed, and the reference temperature A remains at the initial value (= "a"). In this case, the value α may be a fixed value (for example, 1.2), or may be variable depending on the required output (the depression amount of the accelerator pedal 14) as shown in FIG. 3.

Next, the temperature of the motor 11b is detected. When the temperature is equal to or lower than the reference temperature A, the adjusting amount valve 27 is not closed, and the cooling is not performed (step S240). On the other hand, when the temperature of the motor 11b exceeds the reference temperature A, the adjusting amount valve 27 is opened, and the cooling is performed (step S250). The temperature of the motor 11b is detected using a temperature sensor incorporated in the stator coil or the like inside the motor 11b, or is estimated using the integrated value obtained by integrating time after electric current starts to flow, or by other methods. Thus, since the reference temperature A is increased when the required output is equal to or higher than the predetermined value, the cooling using the air flow can be restricted. As a result, a decrease in the output due to a reduction in the amount of intake air can be avoided (or suppressed).

The compressor 11a that generates such an air flow, the adjusting amount valve 27, the ECU 16 that controls the compressor 11a and the adjusting amount valve 27, and the like function as the cooling control means. The case where a decrease in the output is avoided by restricting the cooling according to the required output of the engine 1 has been described. However, a decrease in the output may be avoided by compensating for the output of the engine 1 at the time of cooling. For example, when the cooling of the motor 11b is performed using the air flow, a decrease in the output due to a reduction in the amount of air led into the cylinder 3 can be compensated for by increasing the amount of fuel injection.

In this case, the output is compensated for by setting a coefficient which varies depending on whether or not the cooling of the motor 11b is being performed (for example, when the cooling is not being performed: 1.0, when the cooling is being performed: 1.1), and obtaining the product of this coefficient and the amount of fuel injection. Alternatively, the output may be compensated for by controlling the injection timing. Alternatively, the opening of the throttle valve 13 may be increased so as to increase the amount of intake air, allowing for a reduction in the air led into the cylinder 3 due to the cooling. In this case, the injector 2, the throttle valve 13, the ECU 16, and the like function as the output control means.

## Claims

1. A turbocharger which includes a compressor (11a), a turbine (11a), a motor (11b) that can rotationally drive the compressor (11a) and/or the turbine (11a), and a turbocharger housing (11c) in which the motor (11b) is mounted, and which performs supercharging for an internal combustion engine (1), **characterized by** comprising:
a lead-in passage (25) one end of which is connected to the housing (11c);
air flow generation means (11a, 26, 28) which generates, in the lead-in passage (25), an air flow directed toward an inside of the housing (11c), and
cooling control means (11a, 16, 27) for controlling the air flow generation means (11a) when the motor (11b) is cooled by the air flow generated by the air flow generation means (11a), **characterized in that** the air flow generation means is the compressor (11a), and
the cooling control means (11a, 16, 27) limits generation of the air flow by the air flow generation means (11a) when a required output of the internal combustion engine is equal to or higher than a predetermined value.

2. Turbocharger (11) according to Claim 1, **characterized in that** the other end of the lead-in passage (25) is connected to a portion on downstream side of an intercooler (12) in an intake passage (5) of the internal combustion engine (1).

3. Turbocharger (11) according to Claim 1 or 2, **characterized by** further comprising:
a lead-out passage (26) which is connected to the housing (11c) in order to discharge the air flow from the inside of the housing (11c).

4. Turbocharger (11) according to any one of the preceding Claims, **characterized by** further comprising:
output control means (2, 13, 16) for controlling an output of the internal combustion engine (1), and **characterized in that** the output control means (2, 13, 16) compensates for an output fluctuation of the internal combustion engine (1), which is caused by leading the air flow to the motor (11b) when the air flow is generated by the air flow generation means (11a) .

5. Turbocharger (11) according to Claim 4, **characterized in that** the output control means (2, 13, 16) performs increase correction so that an amount of fuel injection in the internal combustion engine (1) increases with an increase in an amount of the air flow led to the motor (11b) when the air flow is generated by the air flow generation means (11a).

## Patentansprüche

1. Turbolader, der einen Verdichter (11a), eine Turbine (11a), einen Motor (11b), der den Verdichter (11a) und/oder die Turbine (11a) drehend antreiben kann, und ein Turboladergehäuse (11c) hat, in dem der Motor (11b) montiert ist, und der eine Aufladung für eine Brennkraftmaschine (1) ausführt, **gekennzeichnet durch**, dass der Turbolader Folgendes aufweist:
einen Einlassdurchgang (25), wobei ein Ende von diesem mit dem Gehäuse (11c) verbunden ist;
eine Luftströmungserzeugungseinrichtung (11a, 26, 28), die in dem Einlassdurchgang (25) eine Luftströmung erzeugt, die in Richtung eines Inneren des Gehäuses (11c) geführt wird, und
eine Kühlsteuereinrichtung (11a, 16, 27) zum Steuern der Luftströmungserzeugungseinrichtung (11a), wenn der Motor (11b) **durch** die Luftströmung gekühlt wird, die durch die Luftströmungserzeugungseinrichtung (11a) erzeugt wird,
**dadurch gekennzeichnet, dass**
die Luftströmungserzeugungseinrichtung der Verdichter (11a) ist, und
die Kühlsteuereinrichtung (11a, 16, 27) eine Erzeugung der Luftströmung **durch** die Luftströmungserzeugungseinrichtung (11a) begrenzt, wenn eine angeforderte Leistung der Brennkraftmaschine gleich wie oder größer als ein vorbestimmter Wert ist.

2. Turbolader (11) gemäß Anspruch 1, **dadurch gekennzeichnet, dass** das andere Ende des Einlassdurchgangs (25) mit einem Abschnitt an einer stromabwärtigen Seite eines Zwischenkühlers (12) in einem Ansaugdurchgang (5) der Brennkraftmaschine (1) verbunden ist.

3. Turbolader (11) gemäß Anspruch 1 oder 2, **dadurch gekennzeichnet, dass** der Turbolader weiter Folgendes aufweist:
einen Auslassdurchgang (26), der mit dem Gehäuse (11c) verbunden ist, um die Luftströmung von dem Inneren des Gehäuses (11c) abzugeben.

4. Turbolader (11) gemäß einem der vorangehenden Ansprüche, **dadurch gekennzeichnet, dass** der Turbolader weiter Folgendes aufweist:
eine Leistungssteuereinrichtung (2, 13, 16) zum Steuern einer Leistung der Brennkraftmaschine (1), und **dadurch gekennzeichnet, dass** die Leistungssteuereinrichtung (2, 13, 16) eine Leistungsschwankung der Brennkraftmaschine (1) kompensiert, die durch das Leiten der Luftströmung zu dem Motor (11b) verursacht wird, wenn die Luftströmung durch die Luftströmungserzeugungseinrichtung (11a) erzeugt wird.

5. Turbolader (11) gemäß Anspruch 4, **dadurch gekennzeichnet, dass** die Leistungssteuereinrichtung (2, 13, 16) eine Erhöhungskorrektur ausführt, so dass sich eine Kraftstoffeinspritzmenge in die Brennkraftmaschine (1) mit einer Erhöhung einer Menge der Luftströmung erhöht, die zu dem Motor (11b) geleitet wird, wenn die Luftströmung durch die Luftströmungserzeugungseinrichtung (11a) erzeugt wird.

## Revendications

1. Turbocompresseur qui inclut un compresseur (11a), une turbine (11a), un moteur électrique (11b) qui peut entraîner le compresseur (11a) et/ou la turbine (11a) de façon rotative, et un logement de turbocompresseur (11c) dans lequel le moteur électrique (11b) est monté, et qui exécute une suralimentation pour un moteur à combustion interne (1), **caractérisé par** le fait de comprendre:
un passage d'entrée (25) dont une extrémité est reliée au logement (11c);
un moyen de génération de débit d'air (11a, 26, 28) qui génère, dans le passage d'entrée (25), un débit d'air dirigé vers un intérieur du logement (11c), et
un moyen de commande de refroidissement (11a, 16, 27) pour commander le moyen de génération de débit d'air (11a) lorsque le moteur électrique (11b) est refroidi par le débit d'air généré par le moyen de génération de débit d'air (11a), **caractérisé en ce que** le moyen de génération de débit d'air est le compresseur (11a), et
le moyen de commande de refroidissement (11a, 16, 27) limite une génération du débit d'air par le moyen de génération de débit d'air (11a) lorsqu'une sortie requise du moteur à combustion interne est égale à ou supérieure à une valeur prédéterminée.

2. Turbocompresseur (11) selon la revendication 1, **caractérisé en ce que** l'autre extrémité du passage d'entrée (25) est reliée à une portion sur un côté aval d'un refroidisseur intermédiaire (12) dans un passage d'admission (5) du moteur à combustion interne (1).

3. Turbocompresseur (11) selon la revendication 1 ou 2, **caractérisé par** le fait de comprendre en plus:
un passage de sortie (26) qui est relié au logement (11c) afin de décharger le débit d'air depuis l'intérieur du logement (11c).

4. Turbocompresseur (11) selon l'une quelconque des revendications précédentes, **caractérisé par** le fait de comprendre en plus:
un moyen de commande de sortie (2, 13, 16) pour commander une sortie du moteur à combustion interne (1), et **caractérisé en ce que** le moyen de commande de sortie (2, 13, 16) compense une fluctuation de sortie du moteur à combustion interne (1), qui est causée par le fait d'amener le débit d'air au moteur électrique (11b) lorsque le débit d'air est généré par le moyen de génération de débit d'air (11a).

5. Turbocompresseur (11) selon la revendication 4, **caractérisé en ce que** le moyen de commande de sortie (2, 13, 16) exécute une correction d'augmentation de sorte qu'une quantité d'injection de carburant dans le moteur à combustion interne (1) augmente avec une augmentation d'une quantité du débit d'air amené au moteur électrique (11b) lorsque le débit d'air est généré par le moyen de génération de débit d'air (11a).
